(19) Europäisches Patentamt
European Patent Office
Office européen des brevets

(11) **EP 2 832 617 A1**

(12) **EUROPEAN PATENT APPLICATION**
published in accordance with Art. 153(4) EPC

(43) Date of publication:
**04.02.2015 Bulletin 2015/06**

(21) Application number: **12839229.7**

(22) Date of filing: **27.03.2012**

(51) Int Cl.:
**B60W 30/02** (2012.01)     **B60T 8/00** (2006.01)
**B60W 10/04** (2006.01)     **B60W 10/18** (2012.01)

(86) International application number:
**PCT/JP2012/058010**

(87) International publication number:
**WO 2013/145137 (03.10.2013 Gazette 2013/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **TOYOTA JIDOSHA KABUSHIKI
KAISHA**
**Toyota-shi, Aichi-ken, 471-8571 (JP)**

(72) Inventor: **OKUBO, Ryosuke**
**Toyota-shi, Aichi 471-8571 (JP)**

(74) Representative: **Intès, Didier Gérard André et al
Cabinet Beau de Loménie
158, rue de l'Université
75340 Paris Cedex 07 (FR)**

(54) **VEHICLE CONTROL APPARATUS**

(57)     A vehicle control device (1) is provided with an adjusting device (7) and a control device (8). The adjusting device (7) is capable of individually adjusting a rotary phase of each wheel (3) of a vehicle (2). The control device (8) is capable of executing control to individually adjust the rotary phase of each wheel (3) by controlling the adjusting device (7) based on a correlation between the rotary phase of the wheel (3) and hydroplaning characteristics, which indicates resistance to occurrence of a hydroplaning phenomenon, when the vehicle (2) experiences the hydroplaning phenomenon. Therefore, the vehicle control device (1) has an effect of stabilizing behavior of the vehicle when the hydroplaning phenomenon occurs.

FIG.1

**Description**

Field

The present invention relates to a vehicle control device.

Background

Patent Literature 1 discloses a traction control device for vehicle, which decreases braking pressure of a driving wheel on a high-pressure side out of right and left driving wheels such that the pressures in the right and left wheels becomes the same when detecting a hydroplaning state, and thereafter performs identical acceleration slip braking control, as a conventional vehicle control device. According to this, the traction control device for vehicle tries to secure stability of vehicle behavior in the hydroplane state and secure responsiveness of driving wheel slip inhibition at the time of depression of an accelerator in the hydroplane state.

Citation List

Patent Literature

Patent Literature 1: Japanese Patent Application Laid-open No. H05-178187

Summary

Technical Problem

The traction control device for vehicle disclosed in Patent Literature 1 as described above has a room for improvement in the stability of the vehicle behavior when a hydroplaning phenomenon occurs, for example.
The present invention is achieved in view of the above-described circumstances and an object thereof is to provide the vehicle control device capable of stabilizing the vehicle behavior when the hydroplaning phenomenon occurs.

Solution to Problem

In order to achieve the above mentioned object, a vehicle control device according to the present invention includes an adjusting device capable of individually adjusting a rotary phase of each wheel of a vehicle; and a control device capable of executing control to individually adjust the rotary phase of each wheel by controlling the adjusting device based on a correlation between the rotary phase of the wheel and hydroplaning characteristics indicating resistance to occurrence of a hydroplaning phenomenon when vehicle experiences the hydroplaning phenomenon.
Further, in the vehicle control device, it is possible to configure that the correlation between the rotary phase of the wheel and the hydroplaning characteristics is set in advance, and the hydroplaning characteristics are determined according to a pattern of a contact area between a tire mounted on the wheel and a road surface, and changes according to change in the rotary phase of the wheel.
Further, in the vehicle control device, it is possible to configure that the hydroplaning characteristics is a value related to a frictional coefficient of the wheel according to the rotary phase of the wheel.
Further, in the vehicle control device, it is possible to configure that the control device is capable of executing control to adjust rotary phases of right and left wheels of the vehicle to the rotary phases in which the hydroplaning characteristics of the right and left wheels are equivalent by controlling the adjusting device.
Further, in the vehicle control device, it is possible to configure that the control device is capable of executing control to adjust the rotary phase of each wheel of the vehicle to the rotary phase in which the hydroplaning characteristics of the wheel are the maximum by controlling the adjusting device.
Further, in the vehicle control device, it is possible to configure that the control device controls the adjusting device to adjust rotation of the wheel so as to realize the rotary phase in which the hydroplaning characteristics of the wheel are the maximum when a slip ratio of the wheel reaches a reference slip ratio, the reference slip ratio being a slip ratio determined in advance and capable of realizing maximum hydroplaning characteristics.
Further, in the vehicle control device, it is possible to configure that the control device is capable of executing control to adjust the rotary phases of the right and left wheels of the vehicle to the rotary phases in which the hydroplaning characteristics of the right and left wheels are different from each other, thereby allowing a yaw rate of the vehicle to follow a target yaw rate by controlling the adjusting device.

Advantageous Effects of Invention

The vehicle control device according to the present invention has an effect of stabilizing the vehicle behavior when the hydroplaning phenomenon occurs.

Brief Description of Drawings

FIG. 1 is a schematic configuration diagram of a vehicle to which a vehicle control device according to a first embodiment is applied.
FIG. 2 is a development diagram illustrating an example of a tread pattern of a wheel of the vehicle to which the vehicle control device according to the first embodiment is applied.
FIG. 3 is a diagram illustrating an example of a correlation between a rotary phase of the vehicle and hydroplaning characteristics in the vehicle control device according to the first embodiment.
FIG. 4 is a flowchart explaining an example of control by an ECU of the vehicle control device according to the first embodiment.
FIG. 5 is a time chart explaining an example of control by an ECU of a vehicle control device according to a second embodiment.
FIG. 6 is a flowchart explaining an example of the control by the ECU of the vehicle control device according to the second embodiment.
FIG. 7 is a flowchart explaining an example of control by an ECU of a vehicle control device according to a third embodiment.

Description of Embodiments

Embodiments according to the present invention are hereinafter described in detail with reference to the drawings. Meanwhile, the invention is not limited by the embodiments. Components in the following embodiments include a component easily replaced by one skilled in the art or a substantially identical component.

[First Embodiment]

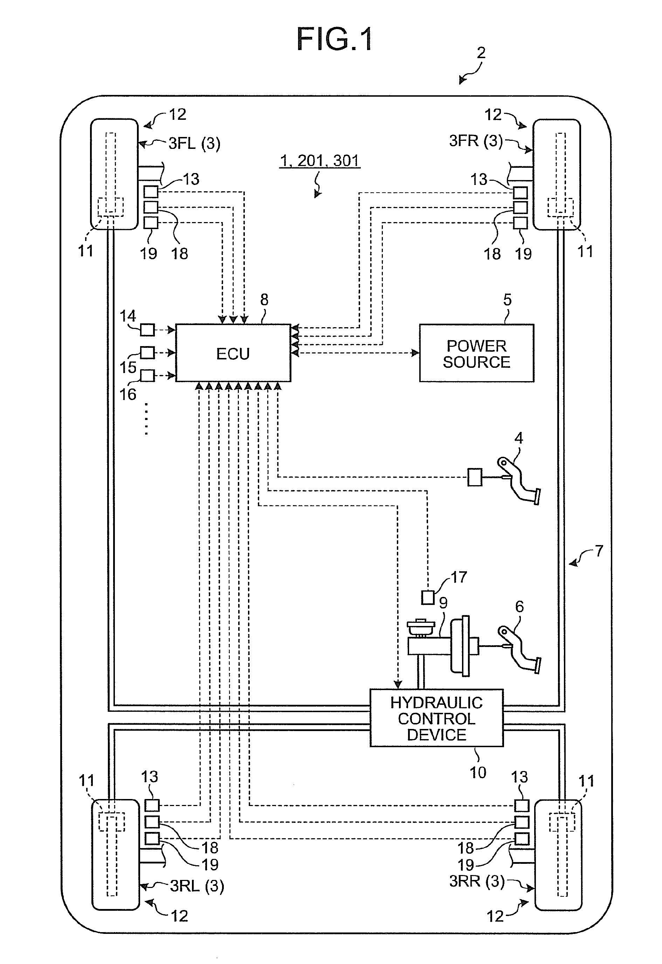

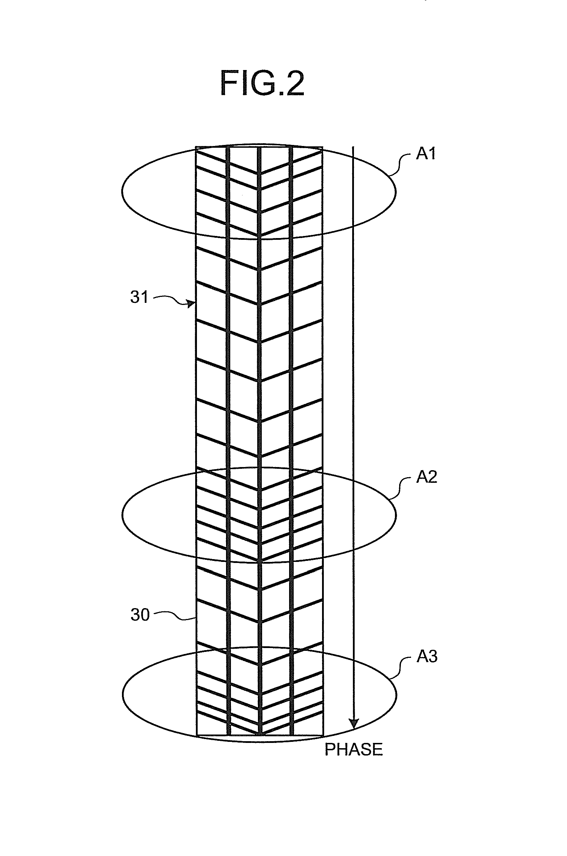

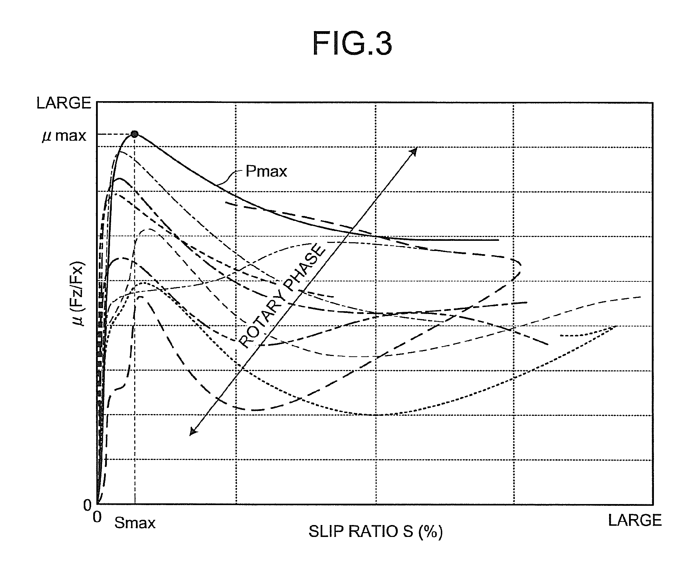

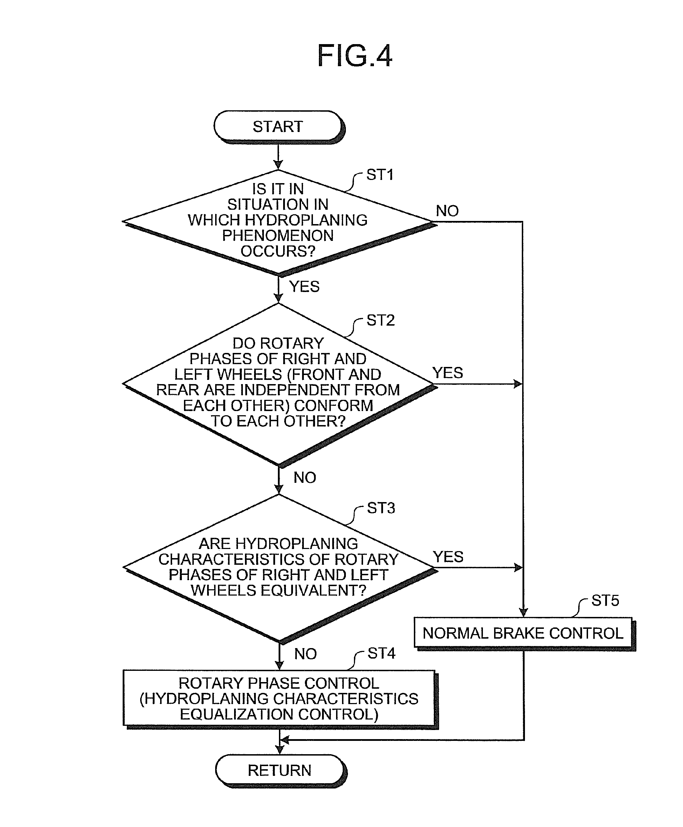

FIG. 1 is a schematic configuration diagram of a vehicle to which a vehicle control device according to a first embodiment is applied, FIG. 2 is a development diagram illustrating an example of a tread pattern of a wheel of the vehicle to which the vehicle control device according to the first embodiment is applied, FIG. 3 is a diagram illustrating an example of a correlation between a rotary phase of the vehicle and hydroplaning characteristics in the vehicle control device according to the first embodiment, and FIG. 4 is a flowchart explaining an example of control by an ECU of the vehicle control device according to the first embodiment.

This embodiment is typically applied to the vehicle and includes following components.

(1) A device, which judges whether it is in a situation in which the vehicle is experiencing the hydroplaning phenomenon.
(2) A mechanism, which discriminates the rotary phase of each wheel of the vehicle.
(3) A mechanism, which can individually adjust rotation of each wheel of the vehicle.
(4) A mechanism, which can perform rotation control of the wheel according to the rotary phase of each wheel of the vehicle.
(5) A map and the like indicating how the correlation with the hydroplaning characteristics (performance) changes according to the rotary phase of the wheel.
(6) The ECU, which can select the rotary phase according to appropriate hydroplaning characteristics under the situation in which the hydroplaning phenomenon occurs.

Herein, the hydroplaning phenomenon (water film phenomenon) is the phenomenon in which, when a vehicle speed increases for a vehicle travelling on a wet road surface covered with a water film, for example, the water film comes between a tire mounted on the wheel and the road surface to raise the tire from the road surface, and according to this, contact between the tire and the road surface is cut by the water film on the road surface. In general, when the vehicle experiences the hydroplaning phenomenon, the tire easily slips and travel stability tends to be damaged. That is to say, when the water film comes between the tire and the road surface and a frictional coefficient between the tire and the road surface becomes extremely small, the vehicle experiences a hydroplaning phenomenon and operation such as steering, braking, and driving by a driver becomes difficult.

This embodiment is capable of stabilizing behavior of the vehicle by appropriately adjusting the rotary phase of each wheel of the vehicle when the vehicle experiences the hydroplaning phenomenon, for example, by the above-described components.

Specifically, a vehicle control device 1 of this embodiment is a brake control system installed in a vehicle 2 as illustrated in FIG. 1 for braking the vehicle 2. The vehicle control device 1 independently and individually controls braking force of each wheel 3 of the vehicle 2 to independently and individually adjust the rotary phase of each wheel 3, thereby improving vehicle stability when the hydroplaning phenomenon occurs. The vehicle 2 is provided with a left front wheel (wheel 3 on a left front side) 3FL, a right front wheel (wheel 3 on a right front side) 3FR, a left rear wheel (wheel 3 on a left rear side) 3RL, and a right rear wheel (wheel 3 on a right rear side) 3RR as the wheels 3 and they are simply referred to as the wheels 3 when it is not especially required to distinguish them from one another. The term of right and left wheels is intended to mean combination of the left front wheel 3FL and the right front wheel 3FR or the combination of the left rear wheel 3RL and the right rear wheel 3RR unless otherwise noted.

The vehicle control device 1 is provided with an accelerator pedal 4, a power source 5, a brake pedal 6, a braking device 7 as an adjusting device, an ECU 8 as a control device and the like. In the vehicle 2, the power source 5 generates power (torque) according to operation of the accelerator pedal 4 by the driver and the power is transmitted to the wheel 3 through a power transmitting device (not illustrated) to generate driving force at the wheel 3. Also, in the vehicle 2, the braking device 7 operates according to operation of the brake pedal 6 by the driver to generate the braking force at the wheel 3.

The power source 5 is the power source for travel such as an internal-combustion engine and an electric motor. The braking device 7 can individually adjust the braking force generated at each wheel 3 of the vehicle 2. Various hydraulic braking devices of which hydraulic path, which connects a master cylinder 9 and a wheel cylinder 11 of each wheel 3 through a hydraulic control device (hydraulic actuator) 10, is filled with brake oil being working fluid serve as the braking device 7. In the braking device 7, a hydraulic braking unit 12 operates according to braking pressure supplied to the wheel cylinder 11 to generate pressure braking force at the wheel 3. In the braking device 7, master cylinder pressure (operational pressure) is applied to the brake oil by the master cylinder 9 according to pedal force (operational force) acting on the brake pedal 6 basically by the operation of the brake pedal 6 by the driver. In the braking device 7, pressure according to the master cylinder pressure acts as wheel cylinder pressure (braking pressure) in each wheel cylinder 11 and according to this, the hydraulic braking unit 12 operates. In each hydraulic braking unit 12, a brake pad abuts a disk rotor to be pressed against the same by the wheel cylinder pressure, and according to this, predetermined rotational resistance force according to the wheel cylinder pressure acts on the disk rotor, which rotates together with the wheel 3, thereby applying the braking force to the disk rotor and the wheel 3 rotating integrally with the same. Meanwhile, in the braking device 7, the wheel cylinder pressure is appropriately adjusted according to an operational state by the hydraulic control device 10.

Herein, the hydraulic control device 10 is configured to individually adjust the braking force generated at each wheel 3 by independently and individually increasing, decreasing, and maintaining the wheel cylinder pressure for each of four wheels. The hydraulic control device 10 is provided on the hydraulic path of the brake oil, which connects the master cylinder 9 and the wheel cylinder 11, for increasing/decreasing liquid pressure in each wheel cylinder 11 by the control by the ECU 8 separately from brake operation of the brake pedal 6 to control the braking force to be applied to each wheel 3. The hydraulic control device 10 includes a plurality of lines, an oil reservoir, an oil pump, each hydraulic line connected to each wheel cylinder 11 provided on each wheel 3, and a plurality of electromagnetic valves for increasing, decreasing, and maintaining hydraulic pressure of each hydraulic line, for example, and is controlled by the ECU 8. The hydraulic control device 10 serves as a working fluid pressure adjusting unit, which transmits the hydraulic pressure (master cylinder pressure) in the hydraulic line to each wheel cylinder 11 to be described later directly or by increasing/decreasing the same according to a control instruction of the ECU 8.

The hydraulic control device 10 can adjust the wheel cylinder pressure acting on the wheel cylinder 11 according to an operational amount (depression amount) of the brake pedal 6 by the driver by driving of the oil pump and a predetermined electromagnetic valve according to the control instruction of the ECU 8, for example. Also, the hydraulic control device 10 can operate in a pressure-increasing mode to increase the wheel cylinder pressure acting on the wheel cylinder 11, a maintaining mode to maintain the same substantially constant, and a pressure-decreasing mode to decrease the same by the driving of the oil pump and a predetermined electromagnetic valve according to the control instruction of the ECU 8, for example, when executing various pieces of automatic control and the like. The hydraulic control device 10 can individually set the above-described mode for each wheel cylinder 11 of each wheel 3 according to a travel state of the vehicle 2 by the control by the ECU 8. That is to say, the hydraulic control device 10 can individually adjust the braking force acting on each wheel 3 according to the travel state of the vehicle 2 irrespective of the operation of the brake pedal 6 by the driver.

The ECU 8 is configured to control driving of each unit of the vehicle 2 and includes an electronic circuit mainly composed of a well-known microcomputer including a CPU, a ROM, a RAM, and an interface. Various sensors and detecting devices attached to each portion of the vehicle 2 are electrically connected to the ECU 8 and electric signals corresponding to detection results are input thereto. For example, each wheel speed sensor 13, which detects a rotational speed of each wheel 3, a yaw rate sensor 14, which detects a yaw rate of the vehicle 2, a rudder angle sensor 15, which detects a rudder angle of the vehicle 2, a front-rear acceleration sensor 16, which detects acceleration in a front-rear direction (travel direction) generated in a vehicle body of the vehicle 2, a master cylinder pressure sensor 17, which detects the master cylinder pressure, each wheel cylinder pressure sensor 18, which detects the wheel cylinder pressure of each wheel 3, and the like are connected to the ECU 8. The wheel cylinder pressure detected by the wheel cylinder pressure sensor 18 is a value according to magnitude of the braking force generated by the hydraulic braking unit 12 of each wheel 3.

The ECU 8 outputs a driving signal to each unit of the vehicle 2 such as the power source 5 and the hydraulic control device 10 of the braking device 7 to control the driving of them by executing a stored control program based on various input signals input from the various sensors and various maps. The ECU 8 can control the hydraulic control device 10 according to the travel state of the vehicle 2 to individually increase/decrease the wheel cylinder pressure (hereinafter, sometimes simply referred to as "brake hydraulic pressure") of the wheel cylinder 11 provided on each wheel 3 and individually control the braking force at each wheel 3, thereby realizing a braking force control function and the like.

In the vehicle control device 1 of this embodiment, the ECU 8 executes rotary phase control to individually adjust the rotary phase of each wheel 3 by controlling the braking device 7 based on the correlation between the rotary phase of the wheel 3 and the hydroplaning characteristics when the vehicle 2 experiences the hydroplaning phenomenon. According to this, the vehicle control device 1 stabilizes the behavior of the vehicle 2 when the hydroplaning phenomenon occurs.

Herein, the hydroplaning characteristics serve as an index indicating resistance to occurrence of the hydroplaning phenomenon in each wheel 3, and as the value becomes relatively large, each wheel 3 tends to be resistant to the hydroplaning phenomenon. In other words, the hydroplaning characteristics represent performance regarding resistance to decrease in tire $\mu$ performance due to floating of the wheel 3 on the wet road surface.

More specifically, the hydroplaning characteristics are typically determined according to a tread pattern 31 of a tire 30 of which one example is illustrated in FIG. 2. The tread pattern 31 is the pattern of a groove formed on an outer peripheral surface of the tire 30 mounted on the wheel 3. The hydroplaning phenomenon occurring in each wheel 3 of the vehicle 2 typically occurs when water between the tire 30 and the road surface cannot be discharged when an amount of water, which comes between the tire 30 mounted on the wheel 3 and the road surface, exceeds water discharge performance (water discharge capacity) by an action of the groove of the tread pattern 31.

The water discharge performance of the tire 30 is the performance determined according to the above-described tread pattern 31 and the like on a contact area between the tire 30 and the road surface. That is to say, the hydroplaning characteristics of each rotary phase of the wheel 3 are the characteristics typically determined by the water discharge performance of the contact area of the tire 30 and determined according to the pattern of the contact area between the tire 30 and the road surface according to the tread pattern 31. That is to say, the hydroplaning characteristics change according to change in the pattern (tread pattern 31) of the contact area between the tire 30 and the road surface according to change in the rotary phase of the wheel 3. Herein, a value related to a frictional coefficient of the wheel 3 (frictional coefficient between the wheel 3 and the road surface, hereinafter, sometimes referred to as "tire $\mu$") at the time of travel on the wet road surface according to the rotary phase of the wheel 3 is used as the hydroplaning characteristics as an example. Herein, the rotary phase of the wheel 3 is the phase according to a rotational angle of the wheel 3.

The correlation between the rotary phase of the wheel 3 and the hydroplaning characteristics of this embodiment is set in advance based on actual vehicle evaluation and the like and is stored in a storage unit of the ECU 8 as the map, a mathematical model and the like. FIG. 3 is an example of a hydroplaning characteristics map m1 indicating the correlation between the rotary phase of the wheel 3 and the hydroplaning characteristics.

The hydroplaning characteristics map m1 illustrated in FIG. 3 indicates how the correlation between the rotary phase and the hydroplaning characteristics (performance) changes according to the rotary phase of the wheel 3. The hydroplaning characteristics map m1 indicates a relationship among the tire $\mu$ at the time of the travel on the wet road surface corresponding to the hydroplaning characteristics, a slip ratio of the wheel 3, and the rotary phase of the wheel 3 and is stored in the storage unit of the ECU 8. Herein, the slip ratio of the wheel 3 is an index indicating slip (skid) between the tire of the wheel 3 and the road surface.

In the hydroplaning characteristics map m1, the slip ratio of the vehicle 2 is plotted along the abscissa and the tire $\mu$ at the time of the travel on the wet road surface is plotted along the ordinate, and the relationship between the slip ratio and the tire $\mu$ for each unit rotary phase of the wheel 3 is set in advance in consideration of the actual vehicle evaluation and the like to be stored in the storage unit of the ECU 8. In other words, the hydroplaning characteristics map m1 corresponds to a $\mu$ - S characteristics (tire $\mu$ - slip ratio characteristics) diagram at the time of the travel on the wet road surface for each unit rotary phase of the wheel 3. The braking force generated at the wheel 3 at the time of the travel on the wet road surface changes according to the tire $\mu$ at the time of the travel on the wet road surface and tends to be larger as the tire μ becomes larger.

In the hydroplaning characteristics map m1, the tire μ at the time of the travel on the wet road surface schematically tends to increase in accordance with increase in the slip ratio to reach peak μ being a maximum value at a peak μ slip ratio and decrease again in each rotary phase. The hydroplaning characteristics, that is to say, the tire μ at the time of the travel on the wet road surface tends to be relatively high when the rotary phase of the wheel 3 is the phase in which groove density of the tread pattern 31 on the contact area of the tire 30 is relatively high. This is because the water discharge performance on the contact area of the tire 30 becomes relatively high. On the other hand, the tire μ at the time of the travel on the wet road surface tends to be relatively low when the rotary phase of the wheel 3 is the phase in which the groove density of the tread pattern 31 on the contact area of the tire 30 is relatively low. This is because the water discharge performance on the contact area of the tire 30 becomes relatively low.

The tire μ at the time of the travel on the wet road surface (hydroplaning characteristics) of the phases with a similar tread pattern 31 and equivalent groove density and water discharge performance become substantially equivalent values even when the rotary phases of the wheel 3 are different to each other. As an example, in the rotary phases indicated by enclosing lines A1, A2, and A3 in FIG. 2, the tread pattern 31 is similar, and the tire μ at the time of the travel on the wet road surface (hydroplaning characteristics) corresponding to the phases are the values substantially similar and relatively high.

The ECU 8 of this embodiment executes the rotary phase control to individually adjust the rotary phase of each wheel 3 by controlling the braking device 7 based on the above-described hydroplaning characteristics map m1. Meanwhile, although the ECU 8 is described to execute the rotary phase control by using the hydroplaning characteristics map m1 illustrated in FIG. 3 in the following description, the ECU 8 is not limited thereto. The ECU 8 may execute the rotary phase control based on the mathematical model corresponding to the hydroplaning characteristics map m1 illustrated in FIG. 3, for example.

The braking device 7 of this embodiment can individually adjust the rotary phase of each wheel 3 by individually adjusting the brake hydraulic pressure of each wheel 3 to individually adjust the braking force at each wheel 3. The ECU 8 can individually and independently control the rotary phase of each wheel 3 by individually and independently adjusting magnitude, a change speed and the like of the brake hydraulic pressure of each wheel 3 by controlling the hydraulic control device 10 of the braking device 7.

The vehicle control device 1 is provided with a rotary phase sensor 19, which detects the rotary phase of each wheel 3, for example, as a mechanism to discriminate the rotary phase of each wheel 3. A sensor, which detects the rotary phase of the wheel 3 by using an encoder and the like, a rotational angle sensor, which detects the rotational angle as a pulse signal, and the like can be used, for example, as the rotary phase sensor 19. Each rotary phase sensor 19 is connected to the ECU 8 and the ECU 8 can discriminate the rotary phase of each wheel 3 based on the detection result by each rotary phase sensor 19. Meanwhile, the vehicle control device 1 is not limited to this and may have a configuration in which the ECU 8 discriminates the rotary phase of each wheel 3 by integrating a detection value by each wheel speed sensor 13 without the rotary phase sensor 19 provided.

Meanwhile, the ECU 8 can also individually and independently control the slip ratio and a slip ratio speed of each wheel 3 by individually and independently adjusting the magnitude, the change speed and the like of the brake hydraulic pressure of each wheel 3 by controlling the hydraulic control device 10 of the braking device 7. The braking device 7 can individually adjust the slip ratio and the slip ratio speed of each wheel 3 by individually adjusting the brake hydraulic pressure of each wheel 3 to individually adjust the braking force at each wheel 3. Herein, the slip ratio is the index indicating the slip (skid) between the tire of the wheel 3 and the road surface as described above and the slip ratio speed is the index indicating a change amount of the slip ratio per unit time. The braking device 7 can change the slip ratio and the slip ratio speed by changing the magnitude of the brake hydraulic pressure and the change speed (pressure-increasing speed and pressure-decreasing speed) of the brake hydraulic pressure, respectively.

The ECU 8 can obtain the slip ratio of the wheel 3 by using various well-known methods. The ECU 8 can obtain a slip ratio S by using a following equation (1) based on a wheel speed Vw of each wheel 3 detected by each wheel speed sensor 13 and a vehicle speed Vr of the vehicle 2 estimated from the wheel speed Vw of each wheel 3 as an example. The slip ratio S is calculated corresponding to each wheel 3 based on each detection value by each wheel speed sensor 13. Meanwhile, the above-described vehicle speed can also be detected by a vehicle speed sensor provided separately from each wheel speed sensor 13.

$$S = (Vr - Vw)/Vr \qquad\qquad (1)$$

The ECU 8 can also obtain the slip ratio speed of the wheel 3 by using various well-known methods. The ECU 8 can obtain the slip ratio speed (in other words, a change speed of the slip ratio) of the wheel 3 $S \cdot (dS/dt)$ by calculating a temporal differential value of the slip ratio, for example. Meanwhile, the slip ratio speed changes according to a depression speed of the brake pedal 6 by the driver, for example, and tends to be relatively fast as the depression operation becomes faster.

Further, the ECU 8 of this embodiment also serves as a device, which judges whether it is in the situation in which the vehicle 2 experiences the hydroplaning phenomenon based on the detection results by the various sensors and detecting devices. The ECU 8 can detect and predict the occurrence of the hydroplaning phenomenon by using various well-known methods. The ECU 8 may also estimate a travel speed of the tire 30 and the vehicle speed at which the hydroplaning phenomenon occurs by means of a simulation using a finite element method, for example, thereby detecting the occurrence of the hydroplaning phenomenon. The ECU 8 may also estimate the vehicle speed at which the hydroplaning phenomenon occurs based on the amount of water on the road surface and the vehicle speed detected based on load noise generated during the travel of the vehicle, for example, thereby detecting the occurrence of the hydroplaning phenomenon. The ECU 8 may also estimate the vehicle speed at which the hydroplaning phenomenon occurs from balance between contact pressure of the tire 30 and dynamic pressure of the water, which comes between the tire and the road surface, for example, thereby detecting the occurrence of the hydroplaning phenomenon. Also, the ECU 8 may detect the occurrence of the hydroplaning phenomenon by detecting that steering torque is smaller for a rudder angle detected by the rudder angle sensor 15, for example. The ECU 8 may also estimate the vehicle speed at which the hydroplaning phenomenon occurs based on a dynamic loaded radius of a side portion of the tire 30 as seen from a rolling direction of the tire 30 of the vehicle 2, the dynamic loaded radius of a central portion of the tire 30, and pneumatic pressure of the tire 30, for example, thereby detecting the occurrence of the hydroplaning phenomenon. The ECU 8 may also detect the occurrence of the hydroplaning phenomenon based on correlation among the brake hydraulic pressure of each wheel 3 detected by each wheel cylinder pressure sensor 18, actual deceleration (braking force) detected by the front-rear acceleration sensor 16, the wheel speed of each wheel 3 detected by each wheel speed sensor 13 and the like.

The ECU 8 of this embodiment executes the rotary phase control to individually adjust the rotary phase of each wheel 3 by controlling the braking device 7 based on the above-described hydroplaning characteristics map m1 when detecting that the vehicle 2 experiences the hydroplaning phenomenon. Herein, the ECU 8 executes hydroplaning characteristics equalization control to adjust the rotary phases of the right and left wheels 3 of the vehicle 2 to the rotary phases in which the hydroplaning characteristics of the right and left wheels 3 are equivalent by controlling the braking device 7 based on the detection result by the rotary phase sensor 19 and the hydroplaning characteristics map m1 as the rotary phase control. That is to say, the ECU 8 executes the hydroplaning characteristics equalization control to equalize the hydroplaning characteristics by controlling the braking device 7 to individually adjust the rotary phases of the right and left wheels 3 of the vehicle 2 as the rotary phase control.

The ECU 8 controls the hydraulic control device 10 of the braking device 7, thereby individually and independently adjusting the magnitude, the change speed and the like of the brake hydraulic pressure of each wheel 3 to individually and independently adjust the slip ratio, the slip ratio speed and the like, thereby individually adjusting the rotary phase of the right and left wheels 3 to equalize the hydroplaning characteristics. For example, the ECU 8 may select the hydroplaning characteristics of one of the right and left wheels to execute the hydroplaning characteristics equalization control so as to conform to the same. The ECU 8 may also select target hydroplaning characteristics based on the hydroplaning characteristics of the right and left wheels and execute the hydroplaning characteristics equalization control so as to realize the target hydroplaning characteristics, for example.

Meanwhile, herein, since the hydroplaning characteristics correspond to the tire $\mu$ at the time of the travel on the wet road surface, the ECU 8 accordingly controls such that the tire $\mu$ at the time of the travel on the wet road surface of the right wheel 3 and that of the left wheel 3 are equivalent by executing the hydroplaning characteristics equalization control. Also, the ECU 8 may independently perform the hydroplaning characteristics equalization control for the left front wheel 3FL and the right front wheel 3FR and the hydroplaning characteristics equalization control for the left rear wheel 3RL and the right rear wheel 3RR as the rotary phase control.

In the vehicle control device 1 configured in the above-described manner, the ECU 8 executes the rotary phase control when the hydroplaning phenomenon occurs in the vehicle 2. As described above, the contact area between the tire 30 and the road surface has various patterns according to the tread pattern 31 for each rotary phase of the tire 30. That is to say, the hydroplaning phenomenon is largely dependent on the pattern of the contact area between the tire 30 and the road surface, in other words, the tread pattern 31. Therefore, under a condition that the hydroplaning phenomenon begins to occur (condition such as the vehicle speed and water thickness), the hydroplaning characteristics of each wheel 3 might change to be different from each other by the change in the pattern of the contact area of the tire 30 according to the rotary phase of the wheel 3.

On the other hand, in the vehicle control device 1, when the vehicle 2 experiences a hydroplaning phenomenon, the ECU 8 executes the rotary phase control based on the correlation between the rotary phase of the wheel 3 and the hydroplaning characteristics (tire $\mu$ at the time of the travel on the wet road surface) as indicated in the hydroplaning characteristics map m1 in FIG. 3. According to this, the vehicle control device 1 can execute the rotary phase control according to the hydroplaning characteristics of each wheel 3 to control the pattern of the contact area of the tire 30 of each wheel 3 through adjustment of the rotary phase of each wheel 3, so that this can appropriately adjust the hydroplaning characteristics of each wheel 3. As a result, since the ECU 8 executes the rotary phase control of each wheel 3 in a feed forward manner to adjust the rotary phase of each wheel 3, the vehicle control device 1 can stabilize the behavior of the vehicle 2 when the hydroplaning phenomenon occurs, thereby improving braking stability, for example.

Herein, since the ECU 8 executes the hydroplaning characteristics equalization control as the rotary phase control, the vehicle control device 1 can conform the hydroplaning characteristics of the right and left wheels of the vehicle 2 to each other under the situation in which the hydroplaning phenomenon occurs. According to this, the vehicle control device 1 can conform timing of the right and left wheels at which they are put into a hydroplaning state to each other and conform timing of the right and left wheels at which they return from the hydroplaning state to each other, for example, so that this can improve straight-ahead stability of the vehicle 2 when the hydroplaning phenomenon occurs. As a result, the vehicle control device 1 can eliminate necessity of unnecessary steering by the driver, for example.

Next, an example of the control by the ECU 8 is described with reference to the flowchart in FIG. 4. Meanwhile, this control routine is repeatedly executed with a control period of several ms to tens of ms. The control to be described below is independently executed for the combination of the left front wheel 3FL and the right front wheel 3FR (that is to say, a front side) and the combination of the left rear wheel 3RL and the right rear wheel 3RR (that is to say, a rear side).

First, the ECU 8 judges whether a current travel situation of the vehicle 2 is the situation in which the hydroplaning phenomenon occurs (ST1). The ECU 8 judges whether it is in the situation in which the vehicle 2 experiences the hydroplaning phenomenon based on the detection results by the various sensors and detecting devices.

When the ECU 8 judges that it is in the situation in which the vehicle 2 experiences the hydroplaning phenomenon (ST1: Yes), this judges whether the rotary phases of the right and left wheels 3 (tires 30) conform to each other based on the detection result by each rotary phase sensor 19 and the like (ST2).

When the ECU 8 judges that the rotary phases of the right and left wheels 3 do not conform to each other (ST2: No), this judges whether the hydroplaning characteristics are equivalent in the rotary phases of the right and left wheels (ST3). The ECU 8 judges whether the hydroplaning characteristics of the right and left wheels are equivalent based on the detection result by each rotary phase sensor 19, the hydroplaning characteristics map m1 illustrated in FIG. 3 and the like, for example.

When the ECU 8 judges that the hydroplaning characteristics of the right and left wheels are not equivalent (ST3: No), this controls the braking device 7 to execute the hydroplaning characteristics equalization control as the rotary phase control (ST4) and finishes a current control period to shift to a next control period. According to this, the ECU 8 can individually and independently adjust the rotary phases of the right and left wheels such that the hydroplaning characteristics of the right and left wheels conform to each other based on the correlation between the rotary phase of the wheel 3 and the hydroplaning characteristics indicated in the hydroplaning characteristics map m1 in FIG. 3.

When the ECU 8 judges that it is not in the situation in which the vehicle 2 experiences a hydroplaning phenomenon at ST1 (ST1: No), when this judges that the rotary phases of the right and left wheels 3 conform to each other at ST2 (ST2: Yes), or when this judges that the hydroplaning characteristics of the right and left wheels are equivalent at ST3 (ST3: Yes), this controls in a following manner. That is to say, the ECU 8 executes normal brake control (ST5) irrespective of the correlation between the rotary phase of the wheel 3 and the hydroplaning characteristics as indicated in the hydroplaning characteristics map m1 in FIG. 3 and finishes the current control period to shift to the next control period.

The vehicle control device 1 according to the above-described embodiment is provided with the braking device 7 and the ECU 8. The braking device 7 can individually adjust the rotary phase of each wheel 3 of the vehicle 2. The ECU 8 can execute the control to individually adjust the rotary phase of each wheel 3 by controlling the braking device 7 based on the correlation between the rotary phase of the wheel 3 and the hydroplaning characteristics indicating the resistance to the occurrence of the hydroplaning phenomenon when the vehicle 2 experiences the hydroplaning phenomenon.

Therefore, since the vehicle control device 1 can individually adjust the rotary phase of each wheel 3 to individually adjust the hydroplaning characteristics of each wheel 3, this can stabilize the behavior of the vehicle 2 when the hydroplaning phenomenon occurs.

[Second Embodiment]

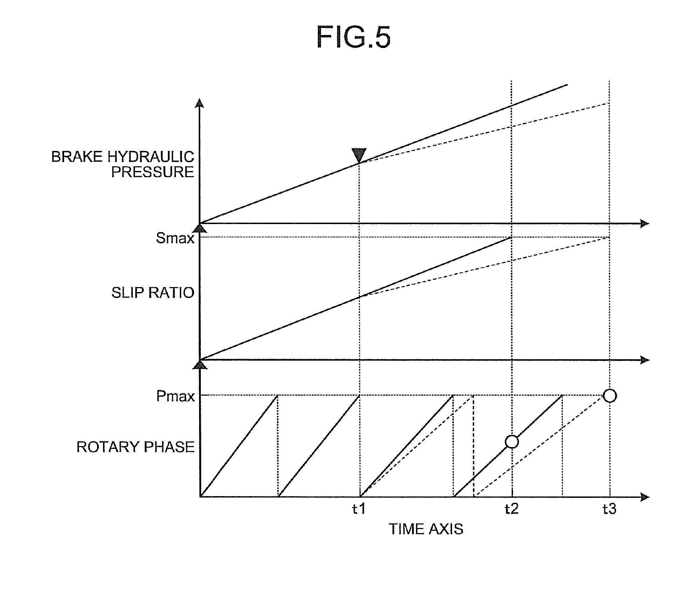

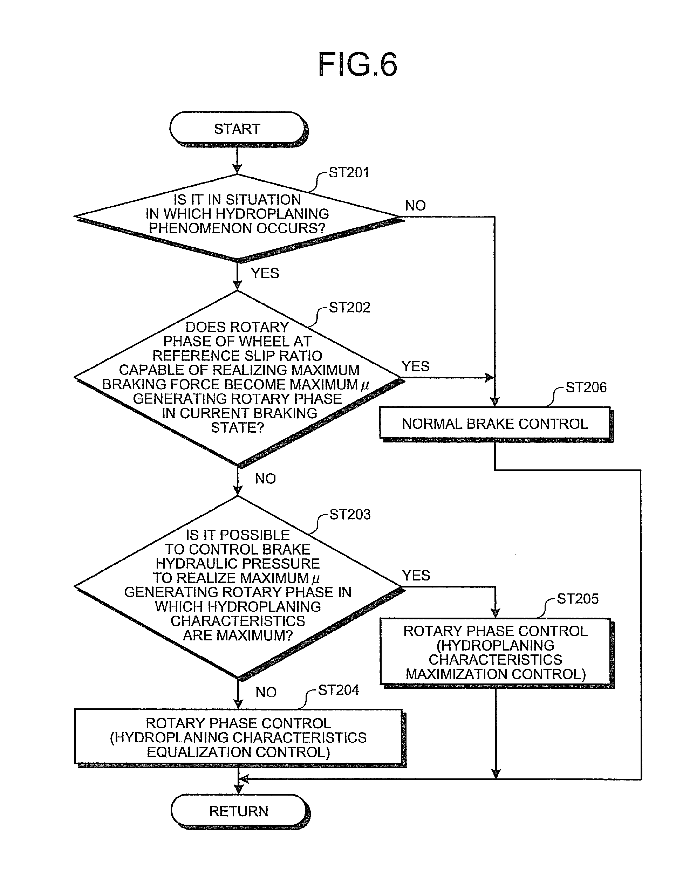

FIG. 5 is a time chart explaining an example of control by an ECU of a vehicle control device according to a second embodiment and FIG. 6 is a flowchart explaining an example of the control by the ECU of the vehicle control device according to the second embodiment. In the vehicle control device according to the second embodiment, contents of rotary phase control are different from those of the first embodiment. A description of a configuration, an action, and an effect common with the above-described embodiment is not repeated as far as possible. Meanwhile, FIG. 1 is appropriately referred to for a detail of each configuration of the vehicle control device according to the second embodiment (the same is true for following embodiments).

When an ECU 8 of a vehicle control device 201 (refer to FIG. 1) according to this embodiment detects that a hydroplaning phenomenon occurs in a vehicle 2, this executes the rotary phase control to individually adjust a rotary phase of each wheel 3 by controlling a braking device 7 based on a hydroplaning characteristics map m1 (refer to FIG. 3). Herein, the ECU 8 executes hydroplaning characteristics maximization control to adjust the rotary phase of each wheel 3 of the vehicle 2 to the rotary phase in which hydroplaning characteristics of each wheel 3 are the maximum by controlling the braking device 7 based on a detection result by a rotary phase sensor 19 and the hydroplaning characteristics map m1 as the rotary phase control. That is to say, the ECU 8 executes the hydroplaning characteristics maximization control to maximize the hydroplaning characteristics by individually adjusting the rotary phase of each wheel 3 of the vehicle 2 by controlling the braking device 7 as the rotary phase control.

The ECU 8 controls a hydraulic control device 10 of the braking device 7, thereby individually and independently adjusting magnitude, a change speed and the like of brake hydraulic pressure of each wheel 3 to individually and independently adjust a slip ratio, a slip ratio speed and the like, thereby individually adjusting the rotary phase of each wheel 3 to maximize the hydroplaning characteristics. For example, the ECU 8 selects a maximum value of the hydroplaning characteristics as target hydroplaning characteristics based on a correlation between the rotary phase of the wheel 3 and the hydroplaning characteristics as indicated in the hydroplaning characteristics map m1 in FIG. 3 and executes the hydroplaning characteristics maximization control to realize the target hydroplaning characteristics. Herein, since the hydroplaning characteristics correspond to tire $\mu$ at the time of travel on a wet road surface, the ECU 8 accordingly controls such that the tire $\mu$ at the time of the travel on the wet road surface of each wheel 3 is the maximum, that is to say, this reaches peak $\mu$ by executing the hydroplaning characteristics maximization control.

Specifically, the ECU 8 controls the braking device 7 to adjust rotation of the wheel 3 to realize the rotary phase in which the hydroplaning characteristics of the wheel 3 are the maximum when the slip ratio of the wheel 3 reaches a reference slip ratio set in advance. The reference slip ratio is the slip ratio determined in advance and the slip ratio capable of realizing the maximum value of the hydroplaning characteristics.

Herein, as described above, the hydroplaning characteristic, that is to say, the tire $\mu$ at the time of the travel on the wet road surface tends to increase in association with increase in the slip ratio to reach the peak $\mu$ being the maximum value at the peak $\mu$ slip ratio and decrease again in each rotary phase as illustrated in FIG. 3. Suppose that the maximum value of the peak $\mu$ of all of the rotary phases is peak $\mu$max, the rotary phase in which the peak $\mu$max can be generated is a maximum $\mu$ generating rotary phase Pmax, and the slip ratio capable of generating the above-described peak $\mu$max in the maximum $\mu$ generating rotary phase Pmax is a peak $\mu$ slip ratio Smax. In this case, the ECU 8 adjusts the rotation of the wheel 3 to adjust the rotary phase such that the rotary phase of the wheel 3 becomes the maximum $\mu$ generating rotary phase Pmax when an actual slip ratio of the wheel 3 is the peak $\mu$ slip ratio Smax. According to this, the vehicle control device 201 can generate the maximum hydroplaning characteristics, that is to say, the peak $\mu$max in the wheel 3. Braking force generated at the wheel 3 at the time of the travel on the wet road surface becomes maximum braking force when the rotary phase of the wheel 3 becomes the maximum $\mu$ generating rotary phase Pmax and the tire $\mu$ at the time of the travel on the wet road surface reaches the peak $\mu$max when the actual slip ratio of the wheel 3 reaches the peak $\mu$ slip ratio Smax. The ECU 8 sets the above-described peak $\mu$ slip ratio Smax as the reference slip ratio in advance based on actual vehicle evaluation and the like.

Herein, an example of the control by the ECU 8 is specifically described with reference to the time chart in FIG. 5. In FIG. 5, time is plotted along the abscissa and the brake hydraulic pressure and the slip ratio and the rotary phase of the wheel 3 are plotted along the ordinate.

When the ECU 8 detects that it is in a situation in which the vehicle 2 experiences the hydroplaning phenomenon at a time t1, this judges whether the rotary phase when the actual slip ratio of the wheel 3 reaches the reference slip ratio (peak $\mu$ slip ratio Smax) becomes the maximum $\mu$ generating rotary phase Pmax in a current braking state (rotational state).

When the ECU 8 judges that the rotary phase becomes the maximum $\mu$ generating rotary phase Pmax when the actual slip ratio of the wheel 3 reaches the reference slip ratio even if the current braking state does not change, this executes normal brake control. In this case, the ECU 8 executes the normal brake control irrespective of the correlation between the rotary phase of the wheel 3 and the hydroplaning characteristics as indicated in the hydroplaning characteristics map m1 in FIG. 3.

On the other hand, when the ECU 8 judges that the rotary phase does not become the maximum $\mu$ generating rotary phase Pmax at a time t2 at which the actual slip ratio of the wheel 3 reaches the reference slip ratio (peak $\mu$ slip ratio Smax) if the current braking state does not change as indicated by a solid line in FIG. 5, this controls in a following manner. That is to say, the ECU 8 controls the braking device 7 to individually and independently adjust the magnitude, the change speed and the like of the brake hydraulic pressure of each wheel 3 to increase/decrease the slip ratio and the slip ratio speed (change gradient of the slip ratio), thereby adjusting the rotation of the wheel 3 such that the rotary phase becomes the maximum $\mu$ generating rotary phase Pmax when the actual slip ratio of the wheel 3 reaches the reference slip ratio.

In this example, the ECU 8 adjusts the rotation of the wheel 3 by decreasing the change speed of the brake hydraulic pressure to decrease the slip ratio speed as indicated by a dashed line in FIG. 5. According to this, the ECU 8 can make the rotary phase of the wheel 3 the maximum μ generating rotary phase Pmax at a time t3 at which the actual slip ratio of the wheel 3 reaches the reference slip ratio (peak μ slip ratio Smax). As a result, the vehicle control device 201 can make the tire μ at the time of the travel on the wet road surface the peak μmax to generate the maximum braking force at the wheel 3.

The vehicle control device 201 configured in the above-described manner can execute the rotary phase control according to the hydroplaning characteristics of each wheel 3 to control a pattern of a contact area of a tire 30 of each wheel 3 through adjustment of the rotary phase of each wheel 3, so that this can appropriately adjust the hydroplaning characteristics of each wheel 3. As a result, the ECU 8 executes the rotary phase control of each wheel 3 in a feed-forward manner to adjust the rotary phase of each wheel 3, so that the vehicle control device 201 can stabilize behavior of the vehicle 2 when the hydroplaning phenomenon occurs, and can improve braking stability, for example.

Herein, since the ECU 8 executes the hydroplaning characteristics maximization control as the rotary phase control, the vehicle control device 201 can select the rotary phase in which the hydroplaning characteristics are the maximum in the wheel 3 under a situation in which the hydroplaning phenomenon occurs. According to this, when the hydroplaning phenomenon occurs, for example, the vehicle control device 201 can recover each wheel 3 to a state in which the maximum braking force can be generated in a short time and recover the same from a hydroplaning state early, so that this can make a braking distance relatively short.

Next, an example of the control by the ECU 8 is described with reference to the flowchart in FIG. 6. Meanwhile, the control to be described hereinafter is executed for each wheel 3.

The ECU 8 first judges whether a current travel situation of the vehicle 2 is the situation in which the hydroplaning phenomenon occurs (ST201).

When the ECU 8 judges that it is in the situation in which the vehicle 2 experiences the hydroplaning phenomenon (ST201: Yes), this judges whether the rotary phase of the wheel 3 when the actual slip ratio of the wheel 3 reaches the reference slip ratio becomes the maximum μ generating rotary phase Pmax in the current braking state based on the detection results by each wheel speed sensor 13 and each rotary phase sensor 19, the hydroplaning characteristics map m1 illustrated in FIG. 3 and the like (ST202). That is to say, the ECU 8 judges whether the rotary phase becomes the maximum μ generating rotary phase Pmax when the actual slip ratio reaches the reference slip ratio in a case in which the slip ratio changes at a current slip ratio speed. Herein, the reference slip ratio is set to the peak μ slip ratio Smax capable of realizing the peak μmax and realizing the maximum braking force.

When the ECU 8 judges that the rotary phase of the wheel 3 does not become the maximum μ generating rotary phase Pmax when the actual slip ratio of the wheel 3 reaches the reference slip ratio if the current braking state does not change (ST202: No), this performs following judgment. That is to say, the ECU 8 judges whether the brake hydraulic pressure can be controlled such that the rotary phase of the wheel 3 becomes the maximum μ generating rotary phase Pmax based on the detection results by each wheel speed sensor 13 and each rotary phase sensor 19, the hydroplaning characteristics map m1 illustrated in FIG. 3 and the like (ST203). Herein, the maximum μ generating rotary phase Pmax is the rotary phase in which the hydroplaning characteristics (tire μ at the time of the travel on the wet road surface) reach the maximum value (peak μmax) as described above.

When the ECU 8 judges that it is not possible to control the brake hydraulic pressure such that the rotary phase of the wheel 3 becomes the maximum μ generating rotary phase Pmax (ST203: No), this controls the braking device 7 to execute hydroplaning characteristics equalization control as the rotary phase control (ST204) and finishes a current control period to shift to a next control period. A case in which it is not possible to control the brake hydraulic pressure such that the rotary phase of the wheel 3 becomes the maximum μ generating rotary phase Pmax includes a case in which it is not possible to finish adjusting the rotary phase of the wheel 3 to the maximum μ generating rotary phase Pmax before the actual slip ratio reaches the reference slip ratio even when the brake hydraulic pressure is made maximum or minimum and the like, for example. In such a case, the ECU 8 individually and independently adjusts the rotary phases of the right and left wheels such that the hydroplaning characteristics of the right and left wheels conform to each other based on the correlation between the rotary phase of the wheel 3 and the hydroplaning characteristics as indicated in the hydroplaning characteristics map m1 in FIG. 3.

When the ECU 8 judges that it is possible to control the brake hydraulic pressure such that the rotary phase of the wheel 3 becomes the maximum μ generating rotary phase Pmax (ST203: Yes), this controls the braking device 7 to execute the hydroplaning characteristics maximization control as the rotary phase control (ST205) and finishes the current control period to shift to the next control period. According to this, the ECU 8 can individually and independently adjust the rotary phase such that the hydroplaning characteristics are the maximum in each wheel 3 based on the correlation between the rotary phase of the wheel 3 and the hydroplaning characteristics as indicated in the hydroplaning characteristics map m1 in FIG. 3.

When the ECU 8 judges that it is not in the situation in which the vehicle 2 experiences the hydroplaning phenomenon at ST201 (ST201: No), or when this judges that the rotary phase becomes the maximum μ generating rotary phase Pmax when the actual slip ratio of the wheel 3 reaches the reference slip ratio even if the current braking state does not change at ST202 (ST202: Yes), this controls in a following manner. That is to say, the ECU 8 executes the normal brake control (ST206) irrespective of the correlation between the rotary phase of the wheel 3 and the hydroplaning characteristics as indicated in the hydroplaning characteristics map m1 in FIG. 3 and finishes the current control period to shift to the next control period.

The vehicle control device 201 according to the above-described embodiment can independently adjust the rotary phase of each wheel 3 to independently adjust the hydroplaning characteristics of each wheel 3, so that this can stabilize the behavior of the vehicle 2 when the hydroplaning phenomenon occurs.

Further, according to the vehicle control device 201 according to the above-described embodiment, the ECU 8 can control the braking device 7 to execute the control to adjust the rotary phase of each wheel 3 of the vehicle 2 to the rotary phase in which the hydroplaning characteristics of each wheel 3 are the maximum. Therefore, the vehicle control device 201 can realize early recovery from the hydroplaning state when the hydroplaning phenomenon occurs, for example, thereby making the braking distance relatively short.

Meanwhile, the ECU 8 described above can execute the hydroplaning characteristics equalization control and the hydroplaning characteristics maximization control together as the rotary phase control. In this case, the ECU 8 controls the braking device 7 to adjust the rotary phases of the right and left wheels 3 of the vehicle 2 to the rotary phases in which the hydroplaning characteristics of the right and left wheels 3 are equivalent and the rotary phases in which the hydroplaning characteristics of each wheel 3 are the maximum. In this case, the vehicle control device 201 can more surely satisfy both of improvement in straight-ahead stability and the early recovery from the hydroplaning state.

[Third Embodiment]

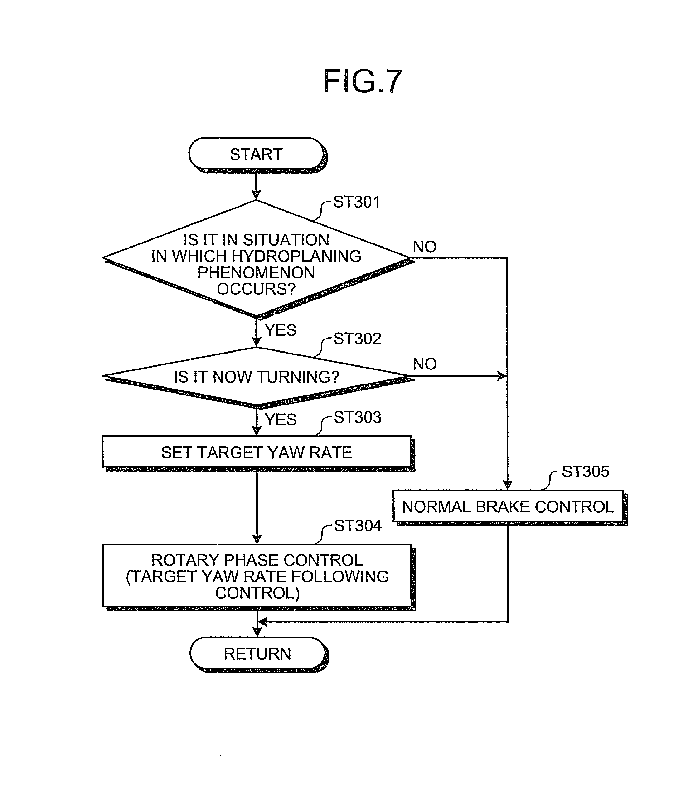

FIG. 7 is a flowchart explaining an example of control by an ECU of a vehicle control device according to a third embodiment. In the vehicle control device according to the third embodiment, contents of rotary phase control are different from those of the first and second embodiments.

An ECU 8 of a vehicle control device 301 (refer to FIG. 1) according to this embodiment executes the rotary phase control to individually adjust a rotary phase of each wheel 3 by controlling a braking device 7 based on a hydroplaning characteristics map m1 (refer to FIG. 3) when detecting that a hydroplaning phenomenon occurs in a vehicle 2. Herein, the ECU 8 can execute target yaw rate following control by controlling the braking device 7 based on a detection result by a rotary phase sensor 19 and the hydroplaning characteristics map m1 as the rotary phase control. The target yaw rate following control is the control to adjust the rotary phases of right and left wheels 3 of the vehicle 2 to the rotary phases in which hydroplaning characteristics of the right and left wheels 3 are different from each other to allow a yaw rate of the vehicle 2 to follow a target yaw rate. That is to say, the ECU 8 can reflect behavior of the vehicle 2 occurring due to difference in the hydroplaning characteristics of the right and left wheels 3 in the control to allow the yaw rate of the vehicle 2 to follow the target yaw rate by executing the target yaw rate following control as the rotary phase control. As a result, the vehicle control device 301 can improve control accuracy of the target yaw rate following control.

Specifically, the ECU 8 sets the target yaw rate by using various well-known methods when the vehicle 2 turns and the like. The ECU 8 calculates the yaw rate generated in the vehicle 2 if the vehicle 2 performs predetermined turning motion from a rudder angle and a vehicle speed based on the detection results by each wheel speed sensor 13, a rudder angle sensor 15 and the like, for example, and sets the same as the target yaw rate.

The ECU 8 controls the braking device 7 to execute the target yaw rate following control as the rotary phase control such that an actual yaw rate of the vehicle 2 detected by a yaw rate sensor 14 approaches the target yaw rate. In this case, the ECU 8 sets target hydroplaning characteristics of each wheel 3 in consideration of a degree of deflection of a vehicle body of the vehicle 2 in a yaw direction due to difference in the hydroplaning characteristics between the right and left wheels 3, that is to say, difference in tire $\mu$ at the time of travel on a wet road surface of the right and left wheels 3. Then, the ECU 8 executes the target yaw rate following control such that the hydroplaning characteristics of each wheel 3 reach the target hydroplaning characteristics by controlling the braking device 7 to individually adjust the rotary phase of each wheel 3 based on deviation between the hydroplaning characteristics of each wheel 3 and the target hydroplaning characteristics. As a result, the vehicle control device 301 can improve swinging stability of the vehicle 2.

Next, an example of the control by the ECU 8 is described with reference to the flowchart in FIG. 7.

First, the ECU 8 judges whether a current travel situation of the vehicle 2 is a situation in which the hydroplaning phenomenon occurs (ST301).

When the ECU 8 judges that it is in the situation in which the vehicle 2 experiences the hydroplaning phenomenon (ST301: Yes), this judges whether the vehicle 2 is now turning based on the detection results by the yaw rate sensor 14, the rudder angle sensor 15 and the like (ST302).

When the ECU 8 judges that the vehicle 2 is now turning (ST302: Yes), this sets the target yaw rate based on the detection results by each wheel speed sensor 13, the rudder angle sensor 15 and the like (ST303).

Then, the ECU 8 controls the braking device 7 based on the deviation between the actual yaw rate detected by the yaw rate sensor 14 and the target yaw rate set at ST303 to execute the target yaw rate following control as the rotary phase control (ST304) and finishes a current control period to shift to a next control period. According to this, the ECU 8 can individually and independently adjust the rotary phase of each wheel 3 such that the actual yaw rate follows the target yaw rate based on the deviation between the actual yaw rate and the target yaw rate, the detection result by the rotary phase sensor 19, and the hydroplaning characteristics map m1.

When the ECU 8 judges that it is not in the situation in which the vehicle 2 experiences the hydroplaning phenomenon at ST301 (ST201: No), or when this judges that the vehicle 2 is not turning now at ST302 (ST302: No), this controls as in a following manner. That is to say, the ECU 8 executes normal brake control (ST305) irrespective of correlation between the rotary phase of the wheel 3 and the hydroplaning characteristics as indicated in the hydroplaning characteristics map m1 in FIG. 3 and finishes the current control period to shift to the next control period.

The vehicle control device 301 according to the above-described embodiment can individually adjust the rotary phase of each wheel 3 to individually adjust the hydroplaning characteristics of each wheel 3, so that this can stabilize the behavior of the vehicle 2 when the hydroplaning phenomenon occurs.

Further, according to the vehicle control device 301 according to the above-described embodiment, the ECU 8 can control the braking device 7 to execute the control to adjust the rotary phases of the right and left wheels 3 of the vehicle 2 to the rotary phases in which the hydroplaning characteristics of the right and left wheels 3 are different from each other to allow the yaw rate of the vehicle 2 to follow the target yaw rate. Therefore, the vehicle control device 301 can inhibit the control accuracy of the control to allow the yaw rate to follow the target yaw rate from deteriorating even when the hydroplaning phenomenon occurs, for example, thereby improving turn stability of the vehicle 2.

Meanwhile, the vehicle control device according to the above-described embodiments of the present invention is not limited to the above-described embodiments and can be variously modified without departing from the scope of claims. The vehicle control device according to this embodiment may be configured by appropriately combining the components of each embodiment described above.

Although the control device of the vehicle control device is described to be the ECU, which controls each unit of the vehicle, in the description above, the control device is not limited to the same and this may be configured separately from the ECU for communicating information such as a detection signal, the driving signal, the control instruction and the like with the ECU, for example.

Although the vehicle control device is described to be the brake control system for braking the vehicle in the description above, the brake control device is not limited thereto and this may be a drive control system for driving the vehicle. That is to say, the vehicle control device may independently and individually control the driving force at each wheel of the vehicle, thereby independently and individually adjusting the rotary phase of each wheel to improve the vehicle stability at the time of the hydroplaning phenomenon. In this case, the adjusting device is configured to be able to individually adjust the rotary phase of each wheel by individually adjusting the braking force at each wheel.

Reference Signs List

1, 201, 301  VEHICLE CONTROL DEVICE

2  VEHICLE
3  WHEEL
3RR  RIGHT REAR WHEEL
3FR  RIGHT FRONT WHEEL
3RL  LEFT REAR WHEEL
3FL  LEFT FRONT WHEEL
7  BRAKING DEVICE (ADJUSTING DEVICE)
8  ECU (CONTROL DEVICE)
30  TIRE
31  TREAD PATTERN

**Claims**

**1.** A vehicle control device, comprising:

an adjusting device capable of individually adjusting a rotary phase of each wheel of a vehicle; and
a control device capable of executing control to individually adjust the rotary phase of each wheel by controlling the adjusting device based on a correlation between the rotary phase of the wheel and hydroplaning characteristics indicating resistance to occurrence of a hydroplaning phenomenon when the vehicle (2) experiences the hydroplaning phenomenon.

2.  The vehicle control device according to claim 1, wherein
    the correlation between the rotary phase of the wheel and the hydroplaning characteristics is set in advance, and the hydroplaning characteristics are determined according to a pattern of a contact area between a tire mounted on the wheel and a road surface, and changes according to change in the rotary phase of the wheel.

3.  The vehicle control device according to claim 1 or 2, wherein
    the hydroplaning characteristics is a value related to a frictional coefficient of the wheel according to the rotary phase of the wheel.

4.  The vehicle control device according to any one of claims 1 to 3, wherein
    the control device is capable of executing control to adjust rotary phases of right and left wheels of the vehicle to the rotary phases in which the hydroplaning characteristics of the right and left wheels are equivalent by controlling the adjusting device.

5.  The vehicle control device according to any one of claims 1 to 4, wherein
    the control device is capable of executing control to adjust the rotary phase of each wheel of the vehicle to the rotary phase in which the hydroplaning characteristics of the wheel are the maximum by controlling the adjusting device.

6.  The vehicle control device according to claim 5, wherein
    the control device controls the adjusting device to adjust rotation of the wheel so as to realize the rotary phase in which the hydroplaning characteristics of the wheel are the maximum when a slip ratio of the wheel reaches a reference slip ratio, the reference slip ratio being a slip ratio determined in advance and capable of realizing maximum hydroplaning characteristics.

7.  The vehicle control device according to any one of claims 1 to 6, wherein
    the control device is capable of executing control to adjust the rotary phases of the right and left wheels of the vehicle to the rotary phases in which the hydroplaning characteristics of the right and left wheels are different from each other, thereby allowing a yaw rate of the vehicle to follow a target yaw rate by controlling the adjusting device.

# FIG.1

# FIG.2

# FIG.3

# FIG.4

START

↓

ST1

IS IT IN SITUATION IN WHICH HYDROPLANING PHENOMENON OCCURS? —NO→

↓ YES

ST2

DO ROTARY PHASES OF RIGHT AND LEFT WHEELS (FRONT AND REAR ARE INDEPENDENT FROM EACH OTHER) CONFORM TO EACH OTHER? —YES→

↓ NO

ST3

ARE HYDROPLANING CHARACTERISTICS OF ROTARY PHASES OF RIGHT AND LEFT WHEELS EQUIVALENT? —YES→

↓ NO

ST5

NORMAL BRAKE CONTROL

ST4

ROTARY PHASE CONTROL (HYDROPLANING CHARACTERISTICS EQUALIZATION CONTROL)

↓

RETURN

# FIG.5

EP 2 832 617 A1

# FIG.6

```
                    ┌──────────────┐
                    │    START     │
                    └──────┬───────┘
                           │
                           ▼
                    ╱────────────╲  ┌ST201
                   ╱  IS IT IN     ╲
                  ╱  SITUATION      ╲         NO
                 ╱ IN WHICH HYDRO-   ╲──────────────────┐
                  ╲ PLANING          ╱                   │
                   ╲ PHENOMENON     ╱                    │
                    ╲ OCCURS?      ╱                     │
                     ╲────────────╱                      │
                           │ YES                         │
                           ▼                             │
                    ╱────────────╲  ┌ST202              │
                   ╱  DOES ROTARY  ╲                     │
                  ╱  PHASE OF WHEEL ╲                    │
                 ╱  AT REFERENCE     ╲                   │
                ╱ SLIP RATIO CAPABLE  ╲     YES          │
               ╱ OF REALIZING MAXIMUM  ╲────────────────┤
                ╲ BRAKING FORCE BECOME ╱                 │
                 ╲ MAXIMUM μ GENERAT- ╱                  │
                  ╲ ING ROTARY PHASE ╱                   ▼
                   ╲ IN CURRENT     ╱         ┌──────────────────────┐ ┌ST206
                    ╲ BRAKING      ╱          │  NORMAL BRAKE        │
                     ╲ STATE?     ╱           │  CONTROL            │
                      ╲──────────╱            └──────────┬──────────┘
                           │ NO                          │
                           ▼                             │
                    ╱────────────╲  ┌ST203              │
                   ╱ IS IT POSSIBLE╲                     │
                  ╱ TO CONTROL BRAKE╲                    │
                 ╱ HYDRAULIC PRESSURE╲    YES            │
                ╱ TO REALIZE MAXIMUM μ ╲────────┐        │
                ╲ GENERATING ROTARY    ╱        ▼        │
                 ╲ PHASE IN WHICH     ╱   ┌──────────────────────┐ ┌ST205
                  ╲ HYDROPLANING     ╱    │ ROTARY PHASE CONTROL │
                   ╲ CHARACTERISTICS ╱    │   (HYDROPLANING      │
                    ╲ ARE MAXIMUM?  ╱     │   CHARACTERISTICS    │
                     ╲──────────────╱     │ MAXIMIZATION CONTROL)│
                           │ NO  ┌ST204   └──────────┬──────────┘
                           ▼                          │
          ┌──────────────────────────────┐           │
          │   ROTARY PHASE CONTROL        │           │
          │ (HYDROPLANING CHARACTERISTICS │           │
          │   EQUALIZATION CONTROL)       │           │
          └──────────────┬───────────────┘           │
                         │                            │
                         ▼◄───────────────────────────┘
                  ┌──────────────┐
                  │    RETURN    │
                  └──────────────┘
```

# FIG.7

```
          ┌─────────────┐
          │    START    │
          └─────────────┘
                 │
                 ▼  ST301
         IS IT IN SITUATION
       IN WHICH HYDROPLANING ──NO──┐
          PHENOMENON               │
            OCCURS?                │
                 │ YES            │
                 ▼  ST302         │
        IS IT NOW TURNING? ──NO──▶│
                 │ YES            │
                 ▼  ST303         │
      ┌─────────────────────┐     │
      │  SET TARGET YAW RATE │     │
      └─────────────────────┘     ▼  ST305
                 │        ┌─────────────────────┐
                 │        │ NORMAL BRAKE CONTROL │
                 ▼  ST304 └─────────────────────┘
   ┌──────────────────────────┐   │
   │   ROTARY PHASE CONTROL    │   │
   │ (TARGET YAW RATE FOLLOWING│   │
   │        CONTROL)           │   │
   └──────────────────────────┘   │
                 │◀───────────────┘
                 ▼
          ┌─────────────┐
          │    RETURN   │
          └─────────────┘
```

## INTERNATIONAL SEARCH REPORT

| | International application No. |
| --- | --- |
| | PCT/JP2012/058010 |

A. CLASSIFICATION OF SUBJECT MATTER
*B60W30/02*(2012.01)i, *B60T8/00*(2006.01)i, *B60W10/04*(2006.01)i, *B60W10/18*(2012.01)i

According to International Patent Classification (IPC) or to both national classification and IPC

B. FIELDS SEARCHED

Minimum documentation searched (classification system followed by classification symbols)
B60W10/00-50/08, B60T7/12-8/1769, B60L1/00-15/42

Documentation searched other than minimum documentation to the extent that such documents are included in the fields searched
Jitsuyo Shinan Koho         1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-280038 A  (Bridgestone Corp.), 20 November 2008 (20.11.2008), all pages (Family: none) | 1-7 |
| A | JP 2002-79929 A  (Sumitomo (SEI) Brake Systems, Inc.), 19 March 2002 (19.03.2002), all pages (Family: none) | 1-7 |
| A | JP 2009-268337 A  (Toyota Motor Corp.), 12 November 2009 (12.11.2009), paragraph [0003] (Family: none) | 1-7 |

☒ Further documents are listed in the continuation of Box C.          ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 April, 2012 (13.04.12) | 24 April, 2012 (24.04.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## INTERNATIONAL SEARCH REPORT

| International application No. |
| --- |
| PCT/JP2012/058010 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2007-276579 A (Nissan Motor Co., Ltd.), 25 October 2007 (25.10.2007), claim 1 (Family: none) | 1-7 |
| A | JP 8-85441 A (Nippondenso Co., Ltd.), 02 April 1996 (02.04.1996), paragraph [0028] (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H05178187 B